(19) Europäisches Patentamt
European Patent Office
Office européen des brevets

(11) **EP 2 832 032 B1**

(12) **FASCICULE DE BREVET EUROPEEN**

(45) Date de publication et mention de la délivrance du brevet:
**29.06.2016 Bulletin 2016/26**

(21) Numéro de dépôt: **13714229.5**

(22) Date de dépôt: **21.03.2013**

(51) Int Cl.:
*H04L 7/04* (2006.01)      *H04J 13/00* (2011.01)
*H04L 27/26* (2006.01)      *H04W 56/00* (2009.01)
*H04W 84/12* (2009.01)

(86) Numéro de dépôt international:
**PCT/EP2013/055896**

(87) Numéro de publication internationale:
**WO 2013/143959 (03.10.2013 Gazette 2013/40)**

(54) **PROCEDE DE SYNCHRONISATION ET DE DETECTION POUR UN SYSTEME DE COMMUNICATION SANS FIL MULTI-STATIONS (WIFI), ET SYSTEME DE COMMUNICATION SANS FIL METTANT EN OEUVRE CE PROCEDE**

SYNCHRONISATIONS- UND ERKENNUNGSVERFAHREN FÜR EIN DRAHTLOSES MULTISTATIONSKOMMUNIKATIONSSYSTEM (WIFI) SOWIE DRAHTLOSES KOMMUNIKATIONSSYSTEM ZUR DURCHFÜHRUNG DIESES VERFAHRENS

METHOD OF SYNCHRONIZATION AND DETECTION FOR A MULTISTATION WIRELESS COMMUNICATION SYSTEM (WIFI), AND WIRELESS COMMUNICATION SYSTEM IMPLEMENTING THIS METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2012 FR 1252841**

(43) Date de publication de la demande:
**04.02.2015 Bulletin 2015/06**

(73) Titulaire: **Comsis**
**75014 Paris (FR)**

(72) Inventeur: **ZHAO, Zhipeng**
**F-94240 L'Hay Les Roses (FR)**

(74) Mandataire: **Pontet Allano & Associes**
**Parc Les Algorithmes, Bâtiment Platon**
**CS 70003 Saint-Aubin**
**91192 Gif-sur-Yvette Cedex (FR)**

(56) Documents cités:
**US-A- 5 991 308      US-A1- 2003 156 603**

• **TAWFIQ, A. ET AL: "Cyclic orthogonal codes in CDMA-Based Asynchronous Wireless Body Area Networks", PROCEEDINGS OF IEEE INTERNATIONAL CONFERENCE ON ACOUSTICS SPEECH AND SIGNAL PROCESSING, 25 mars 2012 (2012-03-25), XP002680250, Kyoto, Japan**

**Description**

**Domaine technique**

La présente invention se rapporte à l'utilisation d'une forme d'onde particulière améliorant la performance de la détection et de la synchronisation dans le cadre d'un réseau WiFi. Cette forme d'onde permet de réaliser un bon compromis entre la performance et la complexité de la mise en oeuvre de cette détection.

**Etat de la technique antérieure**

La communication sans fil WiFi se réalise sur la couche physique, appelée couche PHY (« Physical Layer »). La couche PHY fournit le support de transmission fiable d'information.

La couche MAC (« Medium Access Control Layer »), se charge de la gestion de l'émission/réception dans le contexte de multi-stations.

Dans un réseau WiFi, la couche MAC comprend un protocole de coordination de l'accès à la ressource radio qui est basé sur le protocole CSMA/CA (« Carrier Sense Multiple Access with Collision Avoidance »). Ce mécanisme tient compte du fait que chaque station fonctionne en mode « half-duplex », c'est-à-dire qu'elle ne peut pas écouter et émettre au même moment. Conformément au protocole CSMA/CA, une station commence par écouter le canal pendant une durée aléatoire lorsqu'elle a besoin d'envoyer des paquets de données. Lorsque le canal est libre, la station envoie sa trame. Dans le cas contraire, la station attend un prochain intervalle pour envoyer ses paquets de données. La durée d'écoute est un multiple aléatoire de l'intervalle de temps appelé « timeslot » - voir aussi document US 5 991 308 (FUHRMANN AMIR MICHAEL [US] ET AL.), 23 nov. 1999.

Le but de la présente invention est de proposer un procédé de synchronisation et de détection qui soit plus efficace et plus robuste que les procédés actuels.

**Exposé de l'invention**

Cet objectif est atteint avec un procédé de synchronisation et de détection pour un système de communication sans fil multi-stations (WiFi) mettant en oeuvre une couche, dite couche MAC (« Medium Access Control Layer »), prévue pour implémenter un protocole d'accès multiple et une couche physique, dite couche PHY (« Physical Layer »), prévue pour procurer des fonctions de synchronisation et de détection,
la couche MAC transmettant à la couche PHY des commandes pour réaliser ledit protocole d'accès multiple et la couche PHY générant en réponse au moins une forme d'onde x(t) portant des signaux de synchronisation et des signaux de détection.

Selon l'invention, ce procédé de synchronisation et de détection met en oeuvre un signal cyclique orthogonal ou quasi-orthogonal s(t) pour construire ladite au moins une forme d'onde x(t).

Dans un mode préféré de réalisation de l'invention, les signaux de synchronisation incluent un préfixe cyclique, le signal cyclique orthogonal ou quasi-orthogonal et un suffixe cyclique.

Les signaux de détection peuvent avantageusement inclure une répétition du signal cyclique orthogonal ou quasi-orthogonal, par exemple une répétition de codes Barker.

La forme d'onde spécifique mise en oeuvre dans le procédé de synchronisation et de détection présente de préférence une amplitude sensiblement constante.

La forme d'onde d'amplitude sensiblement constante est par exemple générée par modulation PSK (« Phase Shift Keying »), et de préférence par modulation BPSK (« Binary Phase Shift Keying »).

Le signal cyclique orthogonal ou quasi-orthogonal peut être généré à partir d'une séquence binaire pseudo-aléatoire selon

$$s_n = (-1)^{a_n}, \;\; 0 \le n \le N-1$$

où {$a_n$} est une séquence binaire de taille N.

La forme d'onde correspondant au signal de synchronisation peut être générée en utilisant une m-séquence, i.e. une suite périodique de valeurs produites par un registre à décalage à rétroaction linéaire (LFSR).

Le préfixe cyclique peut être avantageusement agencé pour commander un contrôleur de gain automatique (AGC).

Dans un mode pratique de réalisation du procédé selon l'invention, celui-ci met en oeuvre en outre une couche intermédiaire (QosWiFi) prévue pour coopérer avec la couche MAC pour transmettre des commandes à la couche physique PHY.

Le signal orthogonal ou quasi-orthogonal peut être du type $\bar{s} = (s_0,...,s_{N-1})$ de longueur N qui vérifie:

$$\begin{cases} E(\bar{s}) = \dfrac{1}{N} \sum_{i=0}^{N-1} s_i = \epsilon \\ A(\bar{s},t) = \dfrac{1}{N} \sum_{i=0}^{N-1} s_i s_{i+t}^* = f(t) \end{cases}$$

où E est l'espérance du signal et $A(\bar{s},t)$ est la fonction d'autocorrélation du signal et $\epsilon = 0$ ou $\epsilon \approx 0$ et $f = \delta$ ou $f \approx \delta$ où $\delta$ est une impulsion de Dirac telle que

$$\delta(t) = \begin{cases} 1, & t = 0 \\ 0, & t \neq 0 \end{cases}.$$

Le procédé de synchronisation et de détection peut être mis en oeuvre pour implémenter un mécanisme d'accès multiple de type CSMA/CD (« Carrier Sense Multiple Access with Collision Detection »), et particulièrement un protocole de type « Tournament Contention Function » (TCF).

Suivant un autre aspect de l'invention, il est proposé un système de communication sans fil multi-stations (WiFi) mettant en oeuvre une couche, dite couche MAC (« Medium Access Control Layer »), prévue pour implémenter un protocole d'accès multiple et une couche physique, dite couche PHY (« Physical Layer »), prévue pour procurer des fonctions de synchronisation et de détection, mettant en oeuvre le procédé de détection et de synchronisation selon l'invention.

Dans la présente invention, la couche MAC en collaboration avec une couche intermédiaire baptisée QosWiFi donne les commandes à la couche PHY pour réaliser le protocole de tournoi.

La couche PHY, en demande de la couche MAC, engendre une ou plusieurs formes d'onde (les signaux de synchronisation, les signaux de détection) qui se compose de 3 périodes comme décrit dans le brevet.

On parle du signal orthogonal ou quasi orthogonal, s(t), qui sert à la base pour construire la forme d'onde spécifique x(t) : selon notre proposition, cette forme d'onde est construite de la façon suivante : le préfixe cyclique, le signal quasi-/orthogonal, le suffixe cyclique pour les signaux de synchronisation ; une répétition du signal pour les signaux de détection.

Ce protocole s'opère au niveau de couche MAC. La couche PHY prend en charge la détection/synchronisation.

On comprendra mieux l'invention en se reportant à la description correspondant aux figures ci-après, correspondant au mode préféré de réalisation de l'invention:

- la figure 1 illustre un exemple de signal de synchronisation mis en oeuvre dans le procédé selon l'invention ;
- la figure 2 illustre un exemple de signal de détection mis en oeuvre dans le procédé selon l'invention.

### Description détaillée de l'invention

Initialement, ce système est conçu pour réaliser le nouveau protocole baptisé TCF, (« Tournament Contention Function »), au niveau de couche MAC, dans les réseaux WiFi. Au niveau de la couche PHY (« Physical Layer ») une synchronisation intracellulaire et un mécanisme de détection de la présence d'une forme d'onde spécifique sont essentiels pour réussir ce genre de protocole où l'accès aux ressources radio de plusieurs utilisateurs est possible. En optimisant l'architecture du design, cette implémentation offre une détection de forme d'onde rapide et efficace et une synchronisation temporelle plus précise ainsi que celle du système WiFi.

L'ensemble des formes d'onde à amplitude constante est proposé pour la détection et la synchronisation dans les réseaux WiFi. Ces formes d'onde sont engendrées par les séquences binaires fournies par la couche PHY.

La communication sans fil WiFi se réalise sur la couche PHY qui fournit le support de transmission fiable d'information et la couche MAC qui se charge de la gestion de l'émission/réception dans le contexte de multi-stations. Dans la couche MAC, la coordination de l'accès à la ressource radio est basée sur le protocole CSMA/CA. Conformément à ce protocole, quand une station a besoin d'envoyer des paquets de données, elle écoute le canal pendant une durée aléatoire : si le canal est libre, la station envoie sa trame ; sinon la station attend le prochain intervalle. Ce mécanisme tient compte du fait que chaque station fonctionne en mode « half-duplex », c'est-à-dire qu'elle ne peut pas écouter et émettre au même moment. La durée d'écoute est un multiple aléatoire de l'intervalle de temps *« timeslot »*.

Le protocole TCF est un mécanisme d'accès multiple connu comme CSMA/CD (« Carrier Sense Multiple Access with Collision Detection »). L'accès au canal est basé sur le résultat d'un tournoi dédié qui se compose de N échanges. Avant le tournoi, chaque station se munit d'une séquence de N bits $\{b_i\}$ (*la clef,* avec *i*=1,2,...). Pendant le tournoi au $i^{ème}$ *échange,* la station participant au tournoi transmet une forme d'onde (*le signal de tournoi*) si $b_i$=1 ou écoute si $b_i$=0. En écoutant le canal, si la station entend (détecte) le signal de tournoi, elle est éliminée du tournoi et elle se met en mode d'écoute pour faire des échos. A la fin du tournoi, la station qui n'a détecté aucun signal de tournoi ou a participé au tournoi avec une clef tous 1 ($b_i$=1), est considérée comme le gagnant du tournoi et elle enverra sa trame de données dans le prochain intervalle de transmission disponible.

Afin de mieux gérer le tournoi, ce protocole se déroule en trois phases :

Phase 1 (initialisation) : la phase 1 se compose de 3 étapes.

Etape 1 : dans les réseaux s'opérant en protocole TCF, une station sélectionnée se charge d'initier le tournoi en envoyant le signal de synchronisation $S_{sync1}$. Toutes les stations participant au tournoi se synchronisent d'une façon distribuée en écoutant $S_{sync1}$.
Etape 2 : Un mode écho est conçu pour éviter le problème des « stations cachées ». A cette étape, les stations configurées en mode « avec écho » vont relayer le signal de synchronisation $S_{sync2}$ avec lequel les stations n'ayant pas détecté $S_{sync1}$ à l'étape 1 peuvent se synchroniser.
Etape 3 : les stations synchronisées au signal $S_{sync2}$ vont envoyer le signal $S_{det3}$ à l'étape 3 pour confirmer le mode écho. Au cas où seulement $S_{det3}$ est détecté, les stations vont jouer le tournoi en mode sans écho.

Phase 2 (développement) : après la phase d'initialisation, les stations sont considérées synchronisées temporellement. Le tournoi s'effectue en N échanges dont la durée T est constante. En mode sans écho, au $i^{ème}$ échange les stations ayant $b_i$=1 (la clef) envoient le signal $S_{det1}$ et celles ayant $b_i$=0 écoutent le canal. En mode avec écho, un échange se divise en 2 étapes et la durée est 2T. A la première étape, les stations se comportent comme en mode sans écho ; à la deuxième étape, les stations ayant détecté $S_{det1}$ envoient le signal $S_{det2}$ pour que les stations cachées puissent participer au tournoi. Au $i^{ème}$ échange, si une station en mode d'écoute détecte $S_{det1}$ ou $S_{det2}$, elle perd le tournoi mais réalise un écho $S_{det2}$ *à chaque détection du signal $S_{det1}$.*

Phase 3 (finition) : après les échanges de clef, immédiatement ou après un délai, la station initiatrice doit envoyer le signal de synchronisation $S'_{sync1}$ afin d'indiquer l'intervalle de l'envoi de paquet pour la station gagnante. L'émission de $S'_{sync1}$ cible aussi une resynchronisation des stations en TCF. En mode avec écho, après la transmission de $S'_{sync1}$ les stations ayant reçu $S'_{sync1}$ envoient $S'_{sync2}$ pour synchroniser les stations cachées avant l'émission du gagnant alors en mode sans écho toutes les stations attendent cet intervalle de $S'_{sync2}$. Pour les stations cachées, $S'_{sync2}$ sert aussi comme un signal de synchronisation.

Selon le protocole TCF, le système doit être capable de synchroniser avec les signaux de synchronisation ($S_{sync1}$, $S_{sync2}$, $S'_{sync1}$ et $S'_{sync2}$) et de détecter les signaux de détection ($S_{det1}$ et $S_{det2}$) au niveau de la couche PHY. Sachant que $S_{det1}$ et $S_{det2}$ indiquent l'occupation de canal, il est possible que $S_{det1}$ et $S_{det2}$ soient égaux. Cependant, il est remarquable que le système ait besoin de distinguer $S_{sync1}$, $S_{sync2}$, $S'_{sync1}$ et $S'_{sync2}$ du fait que ces signaux sont employés pour des objectifs différents. De plus, la durée totale de phase 2 est *NT* (mode sans écho) ou 2*NT* (mode avec écho) et il est donc préférable d'utiliser $S_{det1}$ /$S_{det2}$ courts (T petit). Pour ce but, il est nécessaire d'affiner la synchronisation temporelle en concevant astucieusement les signaux de synchronisation afin de diminuer l'intervalle de garde.

On suppose que pendant une certaine durée, l'émetteur envoie un signal à détecter et/ou à synchroniser à l'instant t uniformément distribué dans l'intervalle [0,T -1].

La synchronisation a pour but de trouver l'instant d'émission du signal. Sous la condition que le signal ait été détecté, la synchronisation revient à trouver l'argument t qui maximise la densité de probabilité conditionnelle $p(y|t)$du signal reçu y(t) :

$$\hat{t} = \arg\max_t p(y|t) \quad (1)$$

Par rapport au signal idéal, le signal cyclique orthogonal est plus souhaitable pour construire une forme d'onde de taille suffisamment grande.

Dans les paragraphes suivants, on discute de la réalisation du système de détection/synchronisation du signal cyclique orthogonal.

En pratique, la réalisation de canal h(t) est proche d'une impulsion de Dirac ou une réponse courte qui caractérise les canaux WiFi pour les applications *indoor* ; le critère de détection/synchronisation est approximé par :

$$s(t) \text{ est emis à l'instant } i \text{ ?} \begin{cases} \text{oui} & \text{si } \|Y(i)\| > \dfrac{N}{2}\|h\|^2 \\ \text{non,} & \text{si } \|Y(i)\| < \dfrac{N}{2}\|h\|^2 \end{cases} \qquad (2)$$

où Y(i) est le signal y(t) filtré en utilisant le filtre adapté. Ce critère vient de l'approximation :

$$\left\|Y(i) - h\sqrt{N}\right\|^2 \approx \|Y(i)\|^2 - N\|h\|^2 \qquad (3)$$

quand h(t) s'approche à une impulsion courte.

La simplicité de cette approximation est évidente : au lieu de détecter la vraisemblance à la réalisation de canal, on vérifie la sortie de la projection avec le filtre adapté par rapport à la puissance de canal. La puissance de canal est estimée à l'aide du signal cyclique orthogonal.

L'utilisation du signal cyclique orthogonal permet de concevoir un système de détection/synchronisation à complexité réduite. Pour réaliser le protocole TCF dans le système WiFi, il est nécessaire d'optimiser la forme d'onde afin de simplifier les traitements qui minimisent les défauts du système. En mettant en oeuvre l'algorithme de détection/synchronisation utilisant le signal cyclique orthogonal, il est proposé d'utiliser une forme d'onde à amplitude constante en modulation BPSK (Binary Phase Shift Keying) pour la réalisation du protocole TCF.

Dans le système de communication selon l'invention, la forme d'onde à amplitude constante permet de minimiser l'impact des imperfections matérielles, par exemple la non-linéarité de l'amplificateur de puissance (PA, « Power Amplifier »), le front-end RF, le convertisseur numérique/analogique, etc.

La forme d'onde à amplitude constante est engendrée par la modulation PSK (Phase-Shift Keying). De plus, il est préférable d'employer la modulation BPSK qui permet de compenser IQ-mismatch, l'inadaptation de la voie *In-phase* et *Quadrature.* Dans le système WiFi existant, l'IQ-mismatch est estimé et corrigé dans les modules dédiés qui sont intégrées dans la chaine de l'émission et réception. La suppression du traitement l'IQ-mismatch en utilisant la forme d'onde en modulation BPSK permet donc d'accélérer le traitement et de minimiser les impactes de l'IQ-mismatch.

La séquence binaire pseudo-aléatoire est employée pour générer le signal cyclique orthogonal. Soit $\{a_n\}$ la séquence binaire de taille N, le signal cyclique orthogonal est généré par

$$s_n = (-1)^{a_n}, \quad 0 \le n \le N-1 \quad (4)$$

On propose deux familles de code respectivement pour les signaux de synchronisation ($S_{sync1}$, $S_{sync2}$, $S'_{sync1}$ et $S'_{sync2}$) et les signaux de détection ($S_{det1}$ et $S_{det2}$).

Pour la détection/synchronisation, on choisit la *m*-séquence, MLS (« Maximum Length Sequence ») qui est générée à l'aide du LFSR (« Linear Feedback Shift Register ») pour une taille $N=2^k-1$ avec *k* le degré du polynôme primitif générateur. Cette forme d'onde est employée pour construire les signaux $S_{sync1}$, $S_{sync2}$, $S'_{sync1}$ et $S'_{sync2}$. Dans le contexte du système WiFi, le signal de bande base est cadencé à 20MHz et on choisit la configuration suivante pour les signaux de synchronisation:

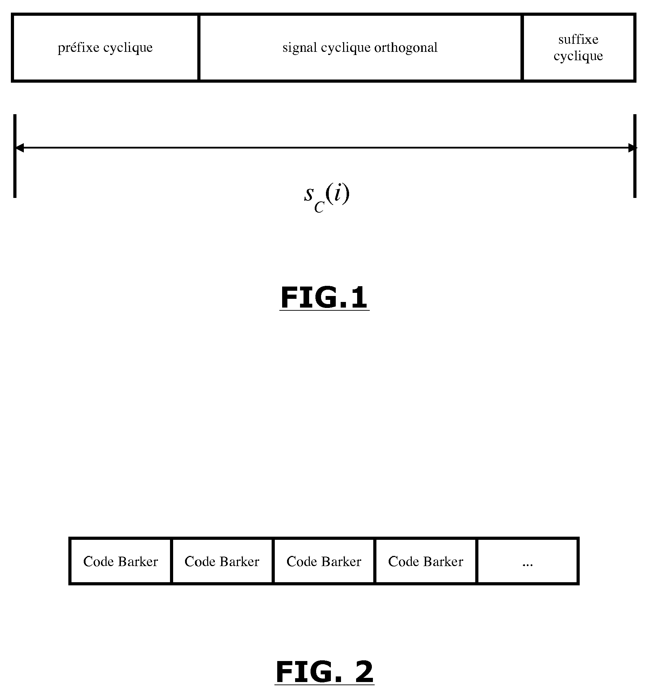

    1) la taille du préfixe cyclique est $N_P$ =40 (2us) ;
    2) la taille du signal cyclique orthogonal est *N*=63(3,15us) ;
    3) la taille du suffixe cyclique est $N_S$ =12(0,6us), en référence à la figure 1.

La portion préfixe cyclique sert à aussi entrainer le contrôleur de gain automatique (AGC) qui adapte le gain de la chaine radiofréquence (RF) à la puissance du signal reçu. Comsis a développé un algorithme rapide pour réaliser cette procédure AGC. En pratique, cette procédure se termine à environs 1us en fournissant une adaptation optimisée au niveau de puissance comprise entre -75dBm et -30dBm. Pour le faible signal avec un niveau inférieur de -75dBm, cet algorithme délivre un gain adapté plus rapidement, en moins de 1us. La configuration du signal tient compte des caractéristiques du canal WiFi dans l'environnement indoor dont l'impulsion de canal est très courte avec RMS (« Root Mean Square ») = 0,25us. La taille du préfixe cyclique est suffisamment grande pour couvrir la procédure AGC et l'étalement du canal à trajet-multiple. Une fois l'AGC s'établit, on commence la procédure de détection/synchronisation jusqu'au bout du suffixe cyclique.

Pour les signaux de détection, $S_{det1}$, $S_{det2}$ et $S_{det3}$, on propose de construire une forme d'onde qui est une répétition du signal cyclique orthogonal. Il suffit de choisir le signal cyclique orthogonal court, par exemple, le signal $S_{det1}$/$S_{det2}$ est engendré par la répétition du code Barker-7, et le signal $S_{der3}$ est engendré par la répétition du code Barker-13, comme illustré dans la figure 2.

La détection des signaux $S_{det1}$, $S_{det2}$ et $S_{det3}$ peut s'effectuer en utilisant la même architecture de détection/synchronisation du signal de synchronisation.

## Revendications

1. Procédé de détection et de synchronisation pour un système de communication sans fil multi-stations (WiFi) mettant en oeuvre une couche, dite couche Medium Access Control Layer, MAC, prévue pour implémenter un protocole d'accès multiple et une couche physique, dite couche Physical Layer, PHY, prévue pour procurer des fonctions de synchronisation et de détection, la couche MAC transmettant à la couche PHY des commandes pour réaliser ledit protocole d'accès multiple et la couche PHY générant en réponse au moins une forme d'onde x(t) portant des signaux de synchronisation et des signaux de détection,
   **caractérisé en ce qu'**il met en oeuvre un signal cyclique orthogonal ou quasi-orthogonal s(t) du type $\bar{s} = (s_0, ..., s_{N-1})$ de longueur N qui vérifie:

$$\begin{cases} E(\bar{s}) = \dfrac{1}{N} \displaystyle\sum_{i=0}^{N-1} s_i = \epsilon \\ A(\bar{s}, t) = \dfrac{1}{N} \displaystyle\sum_{i=0}^{N-1} s_i s_{i+t}^* = f(t) \end{cases}$$

   où E est l'espérance du signal et $A(s, t)$ la fonction d'autocorrélation du signal et $\epsilon = 0$ ou $\epsilon \approx 0$ et $f = \delta$ ou $f \approx \delta$ où $\delta$ est une impulsion de Dirac telle que

$$\delta(t) = \begin{cases} 1, & t = 0 \\ 0, & t \neq 0 \end{cases}$$

   pour construire ladite au moins une forme d'onde x(t) et **en ce que** les signaux de détection incluent une répétition du signal cyclique orthogonal ou quasi-orthogonal et sont générés par une répétition de codes Barker.

2. Procédé selon la revendication 1, **caractérisé en ce que** les signaux de synchronisation incluent un préfixe cyclique, le signal cyclique orthogonal ou quasi-orthogonal et un suffixe cyclique.

3. Procédé selon l'une des revendications 1 ou 2, **caractérisé en ce que** l'au moins une forme d'onde présente une amplitude constante.

4. Procédé selon la revendication 3, **caractérisé en ce que** la forme d'onde d'amplitude constante est générée par modulation Phase Shift Keying, PSK.

5. Procédé selon la revendication 4, **caractérisé en ce que** la forme d'onde d'amplitude constante est générée par modulation Binary Phase Shift Keying, BPSK.

6. Procédé selon l'une quelconque des revendications 1 à 5, **caractérisé en ce que** le signal cyclique orthogonal ou quasi-orthogonal est généré à partir d'une séquence binaire pseudo-aléatoire selon

$$s_n = (-1)^{a_n}, \quad 0 \leq n \leq N-1$$

où {$a_n$} est une séquence binaire de taille N.

7. Procédé selon l'une quelconque des revendications 1 à 6, **caractérisé en ce que** la forme d'onde correspondant au signal de synchronisation est générée en utilisant une m-séquence, qui est une suite périodique de valeurs produites par un registre à décalage à rétroaction linéaire, LFSR.

8. Procédé selon l'une quelconque des revendications 1 à 7 et la revendication 1, **caractérisé en ce que** le préfixe cyclique est agencé pour commander un contrôleur de gain automatique, AGC.

9. Procédé selon l'une quelconque des revendications 1 à 8, **caractérisé en ce qu'**il met en oeuvre en outre une couche intermédiaire, QoSWiFi, prévue pour coopérer avec la couche MAC pour transmettre des commandes à la couche physique PHY.

10. Procédé selon l'une quelconque des revendications 1 à 9, mis en oeuvre pour implémenter un mécanisme d'accès multiple de type Carrier Sense Multiple Access with Collision Detection, CSMA/CD.

11. Procédé selon la revendication 10, mis en oeuvre pour implémenter un protocole de type Tournament Contention Function, TCF.

12. Système de communication sans fil multi-stations (WiFi) mettant en oeuvre une couche, dite couche Medium Access Control Layer, MAC, prévue pour implémenter un protocole d'accès multiple et une couche physique, dite couche Physical Layer, PHY, prévue pour procurer des fonctions de synchronisation et de détection, comprenant des moyens mettant en oeuvre les étapes du procédé de détection et de synchronisation selon l'une quelconque des revendications 1 à 11.

**Patentansprüche**

1. Synchronisierungs- und Erkennungsverfahren für ein drahtloses Multistations-kommunikationssystem (WiFi) zur Umsetzung einer Schicht, der sogenannten MAC-Schicht (Medium Access Control Layer), welche dazu vorgesehen ist, ein Mehrfachzugangsprotokoll zu implementieren, und einer Bitübertragungsschicht, der sogenannten PHY-Schicht (Physical Layer), welche zur Bereitstellung von Synchronisierungs- und Erkennungsfunktionen vorgesehen ist, wobei die MAC-Schicht Befehle zur Durchführung des Mehrfachzugangsprotokolls an die PHY-Schicht sendet und wobei die PHY-Schicht als Antwort mindestens eine Kurvenform x(t) mit Synchronisierimpulsen und mit Erkennungsimpulsen ausgibt,
**dadurch gekennzeichnet, dass** es ein orthogonales oder quasi-orthogonales, zyklische Signal s(t) vom Typ $\bar{s}$ = ($s_0,...,s_{N-1}$) in der Länge N umsetzt zur Feststellung von:

$$\begin{cases} E(\bar{s}) = \dfrac{1}{N} \displaystyle\sum_{i=0}^{N-1} s_i = \epsilon \\[2em] A(\bar{s},t) = \dfrac{1}{N} \displaystyle\sum_{i=0}^{N-1} s_i s_{i+t}^* = f(t) \end{cases}$$

wo E der Erwartungswert des Signals ist und $A(\bar{s},t)$ die Autokorrelationsfunktion des Signals und $\epsilon = 0$ oder $\epsilon \approx 0$ und $f = \delta$ oder $f \approx \delta$, wo $\delta$ ein solcher Dirac-Impuls

$$\delta(t) = \begin{cases} 1, & t = 0 \\ 0, & t \neq 0 \end{cases}$$

zum Aufbau der mindestens einen Kurvenform x(t) ist, und dadurch, dass die Erkennungsimpulse eine Wiederholung des orthogonalen oder quasi-orthogonalen, zyklischen Signals einschließen und durch eine Wiederholung von Barker-Codes erzeugt werden.

2. Verfahren nach Anspruch 1, **dadurch gekennzeichnet, dass** die Synchronisierimpulse ein zyklisches Präfix, das orthogonale oder quasi-orthogonale, zyklische Signal und ein zyklisches Suffix einschließen.

3. Verfahren nach einem der Ansprüche 1 oder 2, **dadurch gekennzeichnet, dass** die mindestens eine Kurvenform eine konstante Amplitude aufweist.

4. Verfahren nach Anspruch 3, **dadurch gekennzeichnet, dass** die Kurvenform mit konstanter Amplitude durch Phasenumtastung (Phase-Shift Keying, PSK) erzeugt wird.

5. Verfahren nach Anspruch 4, **dadurch gekennzeichnet, dass** die Kurvenform mit konstanter Amplitude durch binäre Phasenumtastung (Binary Phase-Shift Keying, BPSK) erzeugt wird.

6. Verfahren nach einem der Ansprüche 1-5, **dadurch gekennzeichnet, dass** das orthogonale oder quasi-orthogonale, zyklische Signal anhand einer pseudo-zufälligen Bitfolge gemäß

$$s_n = (-1)^{a_n}, \qquad 0 \le n \le N-1$$

erzeugt wird,
wo $\{a_n\}$ eine Bitfolge der Größe $N$ ist.

7. Verfahren nach einem der Ansprüche 1-6, **dadurch gekennzeichnet, dass** die dem Synchronisierimpuls entsprechende Kurvenform dadurch erzeugt wird, dass eine m-Folge verwendet wird, welche eine periodische Folge von durch ein linear rückgekoppeltes Schieberegister (LSFR) ausgegebenen Werten ist.

8. Verfahren nach einem der Ansprüche 1-7 und dem Anspruch 1, **dadurch gekennzeichnet, dass** das zyklische Präfix dafür ausgebildet ist, eine automatische Verstärkungsregelung (AGC) zu steuern.

9. Verfahren nach einem der Ansprüche 1-8, **dadurch gekennzeichnet, dass** es außerdem eine Zwischenschicht QoSWiFi umsetzt, welche dafür vorgesehen ist, mit der MAC Schicht zur Übertragung von Befehlen an die PHY Bitübertragungsschicht zusammenzuwirken.

$$\left\{ E(\bar{s}) = \frac{1}{N} \sum_{i=0}^{N-1} s_i = \in \right.$$

10. Verfahren nach einem der Ansprüche 1-9, umgesetzt zur Implementierung eines Mehrfachzugangsmechanismus vom Typ Carrier Sense Multiple Access with Collision Detection (CSMA/CD).

11. Verfahren nach Anspruch 10, umgesetzt zur Implementierung eines Protokolls vom Typ Tournament Contention Function (TCF).

12. Drahtloses Multistationskommunikationssystem (WiFi) zur Umsetzung einer MAC Schicht, der sogenannten Medium Access Control Layer, welche dafür vorgesehen ist, ein Mehrfachzugangsprotokoll zu implementieren, und einer Bitübertragungsschicht, der sogenannten PHY-Schicht (Physical Layer), die zur Bereitstellung von Synchronisierungs- und Erkennungsfunktionen vorgesehen ist, Mittel zur Umsetzung der Arbeitsschritte des Erkennungs- und Synchronisierungsverfahrens nach einem der Ansprüche 1-11 umfassend.

**Claims**

1. Method of detection and synchronization for a multi-station wireless communication system (WiFi) utilizing a layer, known as a Medium Access Control Layer, MAC, provided for implementing a multiple-access protocol and a physical layer, known as a Physical layer, PHY, provided in order to achieve functions of synchronization and detection, the MAC layer transmitting to the PHY layer commands for realizing said multiple-access protocol and the PHY layer generating in response at least one waveform x(t) carrying synchronization signals and detection signals, **characterized in that** it utilizes an orthogonal or quasi-orthogonal cyclic signal s(t) of the type $\bar{s} = (s_0, ..., s_{N-1})$ having a length N which verifies:

$$\begin{cases} E(\bar{s}) = \dfrac{1}{N} \displaystyle\sum_{i=0}^{N-1} s_i = \epsilon \\ A(\bar{s},t) = \dfrac{1}{N} \displaystyle\sum_{i=0}^{N-1} s_i s_{i+t}^* = f(t) \end{cases}$$

where E is the expected value of the signal and $A(\bar{s},t)$ is the autocorrelation function of the signal and $\epsilon = 0$ or $\epsilon \approx 0$ and $f = \delta$ or $f \approx \delta$ where $\delta$ is a Dirac impulse such that

$$\delta(t) = \begin{cases} 1, & t = 0 \\ 0, & t \neq 0 \end{cases}$$

for constructing the said at least one waveform x(t) and **in that** the detection signals include a repetition of the orthogonal or quasi-orthogonal cyclic signal and are generated by a repetition of Barker codes.

2. Method according to claim 1, **characterized in that** the synchronization signals include a cyclic prefix, the orthogonal or quasi-orthogonal cyclic signal and a cyclic suffix.

3. Method according to claim 1 or 2, **characterized in that** the at least one waveform has a constant amplitude.

4. Method according to claim 3, **characterized in that** the waveform of constant amplitude is generated by Phase Shift Keying modulation, PSK.

5. Method according to claim 4, **characterized in that** the waveform of constant amplitude is generated by Binary Phase Shift Keying modulation, BPSK.

6. Method according to any one of claims 1 to 5, **characterized in that** the orthogonal or quasi-orthogonal cyclic signal is generated from a pseudo-random binary sequence according to

$$s_n = (-1)^{a_n}, \quad 0 \leq n \leq N-1$$

where $\{a_n\}$ is a binary sequence of size N.

7. Method according to any one of claims 1 to 6, **characterized in that** the waveform corresponding to the synchronization signal is generated by using an m-sequence, which is a periodic sequence of values produced by a linear feedback shift register, LFSR.

8. Method according to any one of claims 1 to 7 and claim 1, **characterized in that** the cyclic prefix is arranged to command an automatic gain controller, AGC.

9. Method according to any one of the claims 1 to 8, **characterized in that** it also utilizes an intermediate layer, QosWiFi, provided to work together with the MAC layer for transmitting commands to the physical layer PHY.

10. Method according to any one of the claims 1 to 9, utilized in order to implement a multiple-access mechanism of the Carrier Sense Multiple Access with Collision Detection type, CSMA/CD.

11. Method according to claim 10, utilized for implementing a protocol of the Tournament Contention Function type, TCF.

12. Multi-station wireless communication system (WiFi), utilizing a layer, known as a Medium Access Control Layer, MAC, provided for implementing a multiple-access protocol and a physical layer, known as a Physical Layer, PHY, provided in order to achieve functions of synchronization and detection, comprising means utilizing the step of the method of detection and synchronization according to any one of claims 1 to 11.

| préfixe cyclique | signal cyclique orthogonal | suffixe cyclique |
|:---:|:---:|:---:|

$$s_C(i)$$

**FIG.1**

| Code Barker | Code Barker | Code Barker | Code Barker | ... |
|:---:|:---:|:---:|:---:|:---:|

**FIG. 2**

**EP 2 832 032 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5991308 A, FUHRMANN AMIR MICHAEL